Europäisches Patentamt

European Patent Office

Office européen des brevets

(19)

(11) Publication number: **0 197 291**
**A1**

(12) **EUROPEAN PATENT APPLICATION**

(21) Application number: **86102740.7**

(22) Date of filing: **03.03.86**

(51) Int. Cl.⁴: **G 21 C 9/02**

(51) Int. Cl.⁴: **G 21 C 9/02**

(30) Priority: **04.03.85 EP 85102409**

(43) Date of publication of application:
**15.10.86 Bulletin 86/42**

(84) Designated Contracting States:
**AT BE CH DE FR GB IT LI LU NL SE**

(71) Applicant: **Drukier, Andrzej Kamil**
**6 East Street**
**Winchester Massachusetts 01890(US)**

(72) Inventor: **Drukier, Andrzej Kamil**
**6 East Street**
**Winchester Massachusetts 01890(US)**

(74) Representative: **Dipl.-Phys.Dr. Manitz Dipl.-Ing.**
**Finsterwald Dipl.-Ing. Grämkow Dipl.-Chem.Dr. Heyn**
**Dipl.-Phys.Rotermund,**
**B.Sc. Morgan Robert-Koch-Strasse 1**
**D-8000 München 22(DE)**

(54) An automatic system and a method for reactivity control in a nuclear reactor.

(57) An automatic system and method is proposed for reactivity control in a nuclear reactor using a plurality of rod-like elements located, in use, inside the nuclear reactor vessel. In the proposed system each rod-like element comprises an outer sheath, a store of a material having a high capture cross-section for thermal neutrons at an end portion of said sheath, passage means passing from said end portion along said rod-like element, and a thermally sensitive device normally preventing movement of said material along said passage means but responsive to an excessive temperature to permit movement of said material into said passage means. In this way overheating of the thermally sensitive device due, for example, to loss of coolant in the reactor will permit the material having a high capture cross-section for thermal neutrons to move into thermal neutron capturing relationship with the fuel rods thus automatically stopping the chain reaction inside the reactor.

FIG. 1

EP 0 197 291 A1

Croydon Printing Company Ltd.

## An Automatic System and a Method
## for Reactivity Control in a Nuclear Reactor

The present invention relates to an automatic system and
method for reactivity control in a nuclear reactor,
especially in a pressurised water reactor.

The monitoring and control of a nuclear reactor, such as
a pressurised water reactor, involves the use of a great
deal of instrumentation, most of which is located inside
the reactor vessel and some of which is located outside
the reactor vessel. The instrumentation systems are
generally triplicated or quadruplicated to provide sufficient redundancy. Because of the large number of instrumentation systems the making of decisions concerning the
steps to be taken in the event of a change in reactor
operating conditions is a complex process. The need to
take such decisions very reliably under certain circumstances can give rise to substantial problems and experience has shown that despite the high level of instrumentation and redundancy erroneous decisions can nevertheless occur. More recently, computers have been used to
an increasing degree for control purposes because of
their ability to rapidly assess large quantities of data
and to take decisions in accordance with predetermined
programs. Irrespective of whether important decisions are ultimately taken by an operator or by a computer it is clear that the right decision can only be taken on the assumption that the instrumentation is providing reliable data.

The experiences gained from the accident at the Three Mile Island nuclear reactor have however shown that under certain critical circumstances this assumption is not always justified with prior art instrumentation. To explain this more closely it is necessary to review the basic concept of a pressurised water reactor, and this will now be done with reference to a typical design of Westinghouse reactor.

A pressurised water reactor basically consists of a generally cylindrical pressure vessel with steel walls some 20 cm thick. The pressure vessel contains a large number of elongate thin fuel rods which are arranged in clusters. Each cluster is typically a 15 x 15 matrix of fuel rods (although other numbers are also used) and some 240 clusters are arranged in an array inside the reactor vessel with the elongate fuel rods extending parallel to the central longitudinal axis of the generally cylindrical pressure vessel.

In such reactors water serves two important purposes, namely for cooling and for neutron moderation. In use the water, which generally contains a small quantity of a boron compound to adjust its physical properties serves to slow down neutrons to a speed at which they can be readily captured by the uranium fuel in the reactor. Thus the water is essential to the fission process which generates heat. At the same time the water has to remove the heat generated by the fission process in the sense of transporting it out of the reactor to a heat exchanger, where the heat transported by the water is used to raise steam in a secondary circuit with the steam serving to drive turbines for the generation of electricity. Each of the aforementioned fuel clusters generally includes a number of control rods for reactivity control, typically five, which contain elements such as boron and cadmium with a high capture cross-section for thermal neutrons. These control rods can be moved vertically into the reactor core and serve, when positioned adjacent the fuel rods, to absorb sufficient thermal neutrons that the rate of the nuclear fission process is reduced.

One of the most feared reactor accidents is the so-called loss of cooling accident (LOCA) which could have potentially disastrous consequences. If water is lost from a nuclear reactor, for example due to a major break in the primary coolant circuit, then both the moderating action and the cooling action of the water are also lost. Loss of the moderating action is beneficial because this automatically ensures that the fission process moves into the sub-critical range. However, this effect is partially counteracted by the loss of the boron contained in the water. Moreover, in the event of loss of coolant the normal step would be to instantly lower all control rods into the reactor core so that the chain reaction is stopped by these control rods. The most serious problem is however the loss of coolant because the fuel rods in the nuclear reactor continue to generate a considerable amount of heat simply through the natural decay processes which are taking place despite the absence of the moderator and the presence of the control rods. The heat generated is so intense that melting of the fuel rods has to be feared. If the fuel rods melt then a pool of molten uranium falls to the bottom of the reactor vessel and, because of its heat and concentration, can burn through and escape from the bottom of the reactor vessel. Because the potential consequences of such a "melt down" are so serious reactors are designed with several back-up and safety systems aimed to prevent loss of coolant. For example there are typically three distinct primary coolant circuits each of which can be isolated by valves in the event of leakage, with each coolant circuit being independently capable of coping with the cooling of the reactor core. Furthermore, back-up systems exist which are adapted to flood the reactor with water if the pressure therein should fall below a critical level at which boiling of the water within the reactor is to be feared. The operating pressure of the reactor is normally maintained by special pressurising devices which contain electrical heaters.

Nevertheless, the Three Mile Island accident has shown that the incore instrumentation which is required to allow control of the various safety systems can itself fail totally in the event of a loss of coolant accident thus leaving the operators with no truly reliable information on which to base the remedial action that has to be taken. More specifically, in the case of the Three Mile Island reactor the heat generated in an overheating fuel rod caused a chemical reaction between the boron contained in an adjacent control rod and the water still present in the reactor with the result that a high concentration of boric acid was created in the coolant which, at the prevailing temperatures, etched away the contacts to the instrumentation within the reactor core in a very short space of time. Because of this, and because of the conflicting information provided by the remaining instruments, the operators were not aware whether there was too much or too little water in the reactor, hence the remedial action taken was, at it turns out, incorrect which led to a much larger problem than should have been the case if the incore instrumentation had functioned as intended.

From the foregoing it will be evident that there are problems in controlling a nuclear reactor which have not been entirely solved. From a safety point of view the most logical step would be to shut down "scram" the reactor by lowering all the control rods into the array of fuel rods each time there is any indication of a potentially dangerous situation, however, scramming a reactor is expensive (although nothing like as expensive as the costs which could be associated with a major accident) and there is a natural tendency only to scram a reactor when a potentially dangerous situation has been clearly identified. This clear identification however depends on the effectiveness of the instrumentation. The present invention is based on the recognition that even the automatic safety systems are prone to failure because they rely on measuring data inside the reactor vessel, transmitting this data out of the reactor vessel, processing this data outside of the reactor vessel, reaching a decision on the steps to be taken and energising devices to change the operating conditions inside the reactor vessel to put the decision into effect.

The object underlying the present invention is to provide a very reliable automatic safety system and method for reactivity control which can operate in parallel with existing systems, which can be retrofitted to existing nuclear reactors and which depends only on the laws of nature and does not require any transmission of information out of and into the reactor vessel.

It is a further object of the present invention to permit the automatic stopping of the chain reaction in any particular overheating fuel rod without necessarily having to scram the whole reactor.

In order to satisfy these objects there is provided, in accordance with the present invention an automatic system for reactivity control in a nuclear reactor using a plurality of rod-like elements located, in use, inside the nuclear reactor vessel, wherein each rod-like element comprises an outer sheath, a store of a material having a high capture cross-section for thermal neutrons at an end portion of said sheath, passage means passing from said end portion along said rod-like element, a thermally sensitive device normally preventing movement of said material along said passage means but responsive to an excessive temperature to permit movement of said material into said passage means.

Using this system a thermally sensitive device, which need be no more than a fusible plug, normally holds the material used for reactivity control, i.e. the material having a high capture cross-section for thermal neutrons at a position within the rod-like element in which it does not affect the nuclear fission process within the fuel rods.

If one or more of the fuel rods should overheat then the thermally sensitive device reacts making it possible for the material in the store to move along the passage means into a position in which it is able to capture thermal neutrons thus substantially slowing down the nuclear fission process responsible for heat generation in the overheating fuel rod or rods.

The system does not require the transmission of no information out of or into the reactor vessel and is highly reliable because it merely depends on the laws of nature.

In one embodiment the rod-like elements may comprise the control rods of a nuclear reactor. In other words existing designs of control rods are modified to
incorporate the automatic system of the present
invention.

It will be apparent, that such modified control rods
can, providing they have the same external dimensions
and fittings, be substituted for the existing control
rods of existing nuclear reactors so that they may be
used in the normal way for reactivity control but
simultaneously also offer the back-up safety system of
the present proposal.

Because the back-up system of the present proposal
operates totally independently of all other systems it
is possible, should local overheating of a fuel rod
occur, for this local overheating to be dealt with by
the system of the present invention without any need to
shut down the whole reactor.

The store of material in the control rod would normally
be disposed above or below the adjacent fuel rods of the
nuclear reactor out of neutron capturing relationship
therewith. Thus the store of material will not in any
way affect the normal operation of the nuclear reactor.

In an alternative embodiment of the automatic system the
rod-like elements themselves comprise fuel rods of the
nuclear reactor and the store of material is normally
disposed above or below the nuclear fuel contained in
the fuel rods out of neutron capturing relationship
therewith.

This embodiment is particularly beneficial because it
means that overheating of a particular fuel rod will be
automatically stopped by the material having a high
capture cross-section for thermal neutrons which is
stored in that fuel rod, so that the action of the safety system is highly localised and acts directly at
the source of potential danger. The material having a
high capture cross-section for thermal neutrons should
itself be molten or flowable at least at the excessive
temperature at which the thermally sensitive device is
set to react and preferably at the normal operating
temperature of the reactor. In other words the material
in question is made highly mobile either by ensuring
that it is in the molten state or for example by
fashioning it into small spheres which can flow readily.

In one particularly favoured embodiment the thermally
sensitive device comprises a fusible plug adapted to
melt and permit the material having a high capture
cross-section for thermal neutrons to flow downwardly
into the passage means, i.e. into neutron capturing
relationship with the associated overheating fuel rod,
under the effects of gravity. It will be appreciated
that the fusible plug used for the thermally sensitive
device merely needs to be in adequate thermally
conducting relationship with the overheating fuel rod
and that the melting of the fusible plug is then simply
an effect of nature because particular materials have
particular well known melting points. Adequate thermal
conduction between the overheating fuel rod and the
fusible plug may be provided simply by the proximity of
the fusible plug to the fuel rod and the coupling medium
inbetween, be it water or vapor or metallic in nature.
The downward flow of the material having a high capture
cross-section is merely a natural consequence of the
force of gravity and is thus again a reliable effect.

The thermally sensitive device may also comprise a
thermal valve positioned in thermally conducting
relationship with one or more adjacent fuel rods of the
nuclear reactor. For example the thermal valve may
comprise a bimetallic strip which deflects on reaching a certain temperature and which is able to free an opening and to permit the material having a high capture cross-section for thermal neutrons to flow downwardly into the passage means under gravity. The action of a bimetallic strip is again an effect which takes place in accordance with the laws of nature and is thus also extremely reliable.

In a further alternative embodiment the thermally sensitive device comprises a magnetic valve including a magnetic element of a material having a Curie point corresponding to said excessive temperature, whereby the magnetic force of attraction of said magnetic element is substantially lost on reaching said Curie point thereby opening the valve, and wherein the valve is again adapted to permit the material having a high capture cross-section for thermal neutrons to flow under gravity into the passage means.

In a further development of the above concept a fusible support column of a material which has a low capture cross-section for thermal neutrons and which is also molten at said excessive temperature is provided above said thermally sensitive device and the material having a high capture cross-section for thermal neutrons is provided in an end portion of said rod-like element above said fusible support column.

The use of a fusible support column makes it possible to place the thermally sensitive device in a position in which it may directly respond to overheating in an adjacent fuel rod while still making it possible to maintain the store of material at a location sufficiently far removed from the adjacent fuel rods that it does not interfere undesirably with the normal fission process. Because the fusible support column will itself be molten at the excessive temperature it is able to flow downwardly under the effects of gravity through the thermally sensitive device once the latter opens, freeing the way for corresponding downward movement of the material having a high capture cross-section for thermal neutrons.

The fusible support column preferably comprises zinc or lead or an alloy thereof. These are very dense metals so that the material having a high capture cross-section for thermal neutrons, which can be used in an alloy or compound which is less dense than the material of the support column, can simply float on the top of the fusible support column. Moreover, it is easy to provide a zinc or lead alloy which has a melting point in the range of temperatures within which the selected excessive temperature will normally lie (for example between 325 and 350$^{\mathrm{o}}$C).

In a yet further alternative embodiment the store of material is molten, or possibly even vaporised, at a normal operating temperature of the nuclear reactor and is provided in a bottom end portion of said rod-like element, with said passage means extending substantially from said bottom end portion of said rod-like element upwardly along said rod-like element, and with said thermally sensitive device being adapted to cause said material to flow upwardly along said passage means when said excessive temperature is reached. This embodiment is particularly preferred for incorporation into a fuel rod of a nuclear reactor. In this embodiment the store of material having a high capture cross-section for thermal neutrons is located sufficiently far below the fuel in the nuclear fuel rod that it does not interfere with the normal operation of the fuel rod.

When using an automatic system of this kind the thermally sensitive device may conveniently comprise a fusible material having a density greater than that of said material with a high capture cross-section for thermal neutrons, the fusible material of the thermally sensitive device should melt at said excessive temperature, and the rod-like element should be adapted to permit the fusible material to flow downwardly into the store of material on melting, thereby causing the material in said store to rise into said passage means. This embodiment exploits the different densities of the two materials to produce upward movement of the less dense material having a high capture cross-section for thermal neutrons. In a particular arrangement of this embodiment the thermally sensitive device may further comprise a fusible plug for holding back said fusible material at a normal operating temperature of said nuclear reactor. Thus only a small plug needs to melt in order to free the more dense molten material so that it runs to the bottom of the associated rod to produce movement of said material having a high capture cross-section for thermal neutrons.

In a further development of this concept said passage means can expediently comprise capillary passage means and the store of material is adapted to climb said passage means by capillary action on operation of said thermally sensitive device.

For this purpose the capillary passage means can extend into the store of neutron capturing material and the thermally sensitive device can simply comprise a fusible plug normally blocking said capillary passage means. Once the (small) fusible plug has melted, on reaching an excessive temperature, the molten material having a high capture cross-section for thermal neutrons rapidly ascends these passages by capillary action. Again capillary action is an effect of nature and may therefore be reliably exploited.

As an alternative the capillary passage means may have one or more openings provided at a level above said store of material and said thermally sensitive device may be adapted to permit material denser than said neutron capturing material to fall by gravity into said store of neutron capturing material when said excessive temperature is reached, thereby causing said neutron capturing material to rise into contact with said openings, whereupon it ascends said capillary passages.

Embodiments in which the store of material is located at the bottom of the rod-like element are particularly well adapted for use with fuel rods where space is at a premium within the individual rods. Indeed, using a fuel rod it may be possible to exploit the clearance normally provided between the individual pellets of nuclear fuel and the zirconium tube of the fuel rod as the passage means required for upward movement of said material having a high capture cross-section for thermal neutrons.

The material having a high capture cross-section for thermal neutrons preferably comprises cadmium, samarium, dyspersium, gadolinium or boron, or an alloy or compound of one or more of these elements. The use of cadmium or boron for reactivity control is well known in nuclear reactors and these elements have the advantage of being relatively inexpensive. However, materials such as samarium, dyspersium and gadolinium may also be used for the purposes of the present invention. These materials have a very high capture cross-section for thermal neutrons and thus only need to be used in smaller quantities. Thus, although they are more expensive less material is required. Moreover, because the automatic system of the present invention is intended to be suitable for incorporation into existing designs of fuel rods or control rods the fact that only a small quantity
of the cited materials is required should make the task
of incorporating the presently proposed automatic
systems into the space available considerably easier.
The abovementioned rare earth elements are also
interesting in as much as they frequently have good
magnetic properties so that they could readily be
incorporated into a thermally sensitive device in the
form of a magnetic valve.

As far as gadolinium is concerned this material has an
exceptionally high neutron capture cross-section and
compounds exist with a relatively low vaporising
temperature. In view of this it is envisaged that a
vapor of a gadolinium compound could be used to poison a
nuclear fuel rod very rapidly using an absolutely
minimal quantity of material which would be particularly
beneficial in a fuel rod where, as previously mentioned,
space is at a premium.

In the above described automatic safety system means is
usefully provided for detecting whether said material
having a high capture cross-section for thermal neutrons
has moved into said passage means. This makes it
possible to check the operational state of the automatic
safety system and to determine when the safety system
has been triggered in any particular case.

In a particularly simple embodiment the detecting means
may comprise a switch contact normally bridged by said
store of material but interrupted when at least some
material has flowed out of said store.

Finally, the present invention also comprises a method
of automatically controlling the reactivity of a nuclear
reactor comprising the step of providing a store of a
material having a high capture cross-section for thermal neutrons in one or more rod-like elements in said
nuclear reactor and permitting said material to move by
natural physical forces independent of any energy supply
from outside of said reactor vessel into thermal neutron
capturing relationship with one or more fuel rods in the
event of an excessive increase in the operating
temperature of said fuel rod or rods above a normal
operating temperature.

The invention will now be explained in further detail by
way of example only and with reference to the
accompanying drawings which show, schematically and not
to scale:

Fig. 1   a longitudinal section through a control
         rod for a nuclear reactor in accordance
         with the present invention,

Fig. 2   a longitudinal section through an alternative embodiment of the control rod of
         Fig. 1,

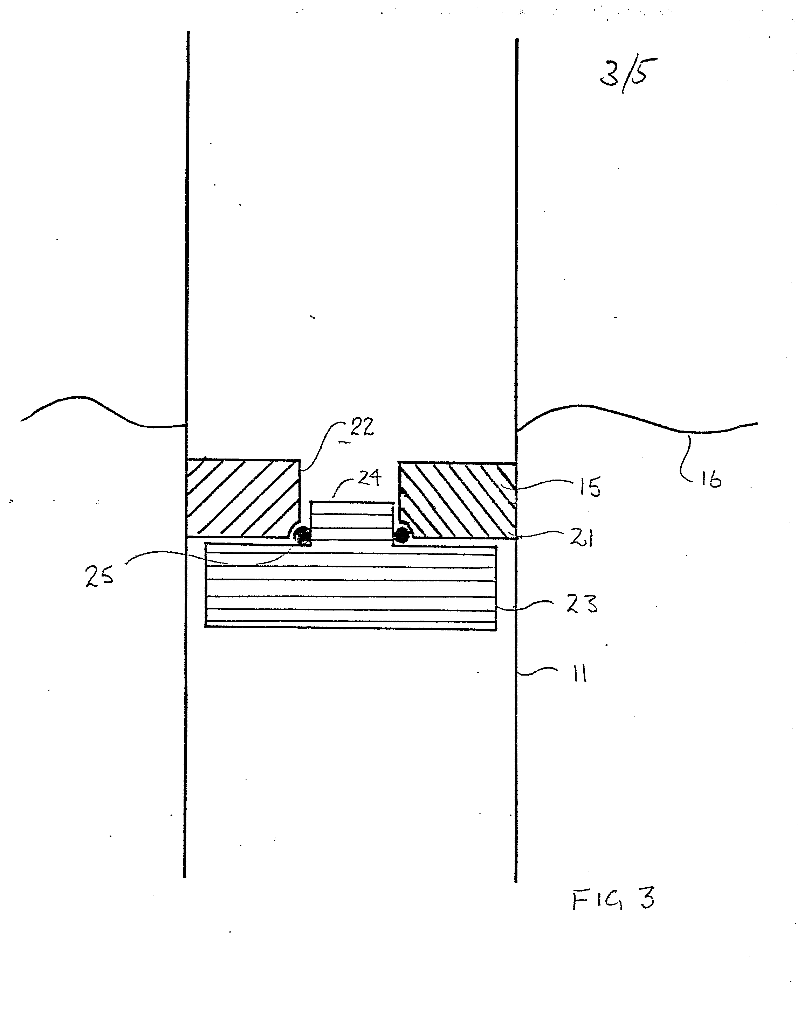

Fig. 3   a longitudinal section through part of
         another embodiment of
         a control rod in accordance with the
         present invention,

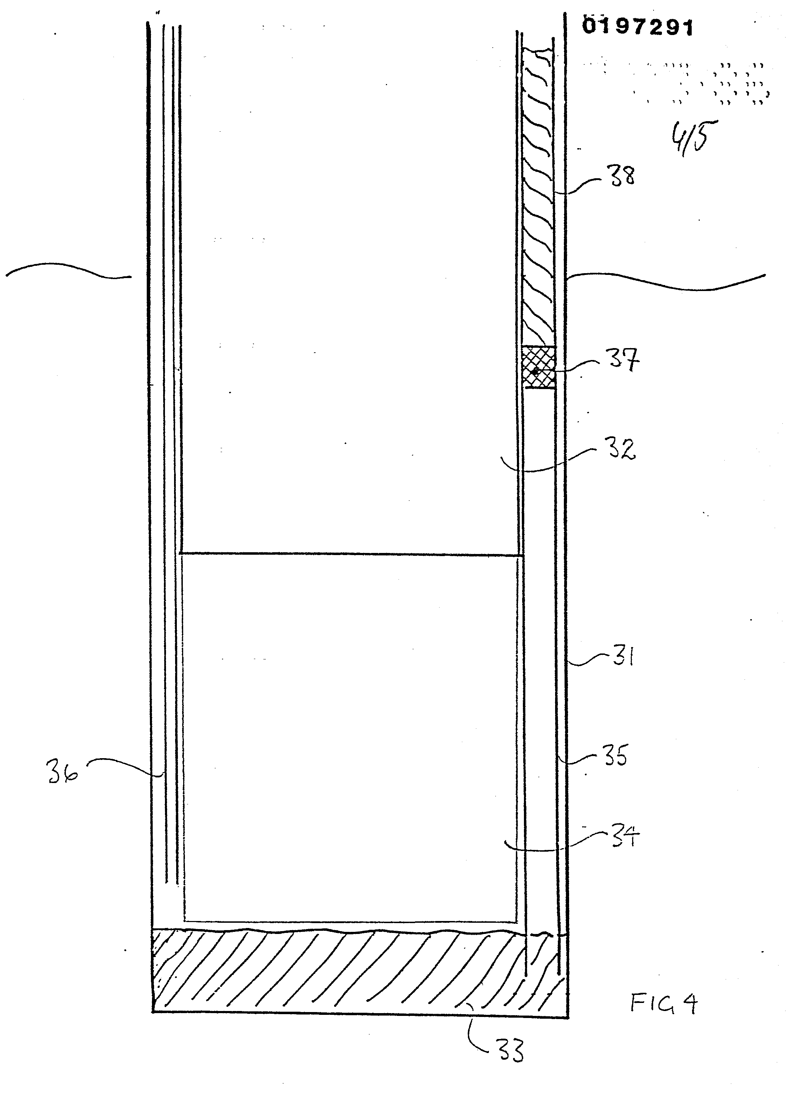

Fig. 4   a longitudinal section through a fuel rod
         for a nuclear reactor in accordance with
         the present invention, and

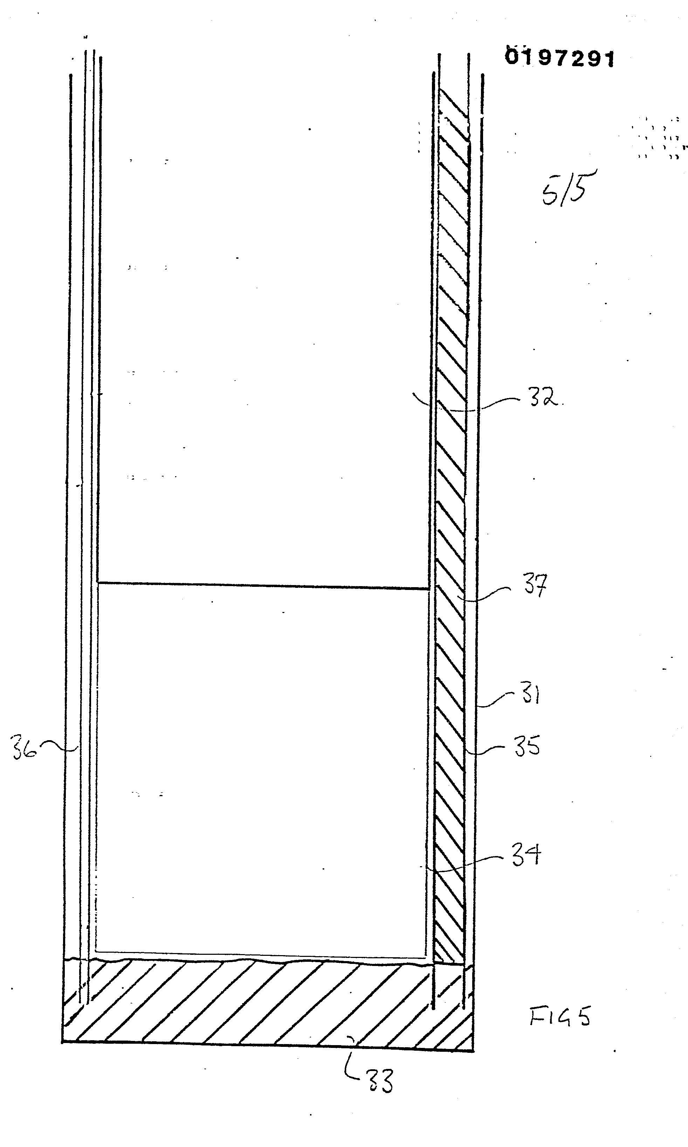

Fig. 5   a longitudinal section through a further
         embodiment similar to that of Fig. 4.

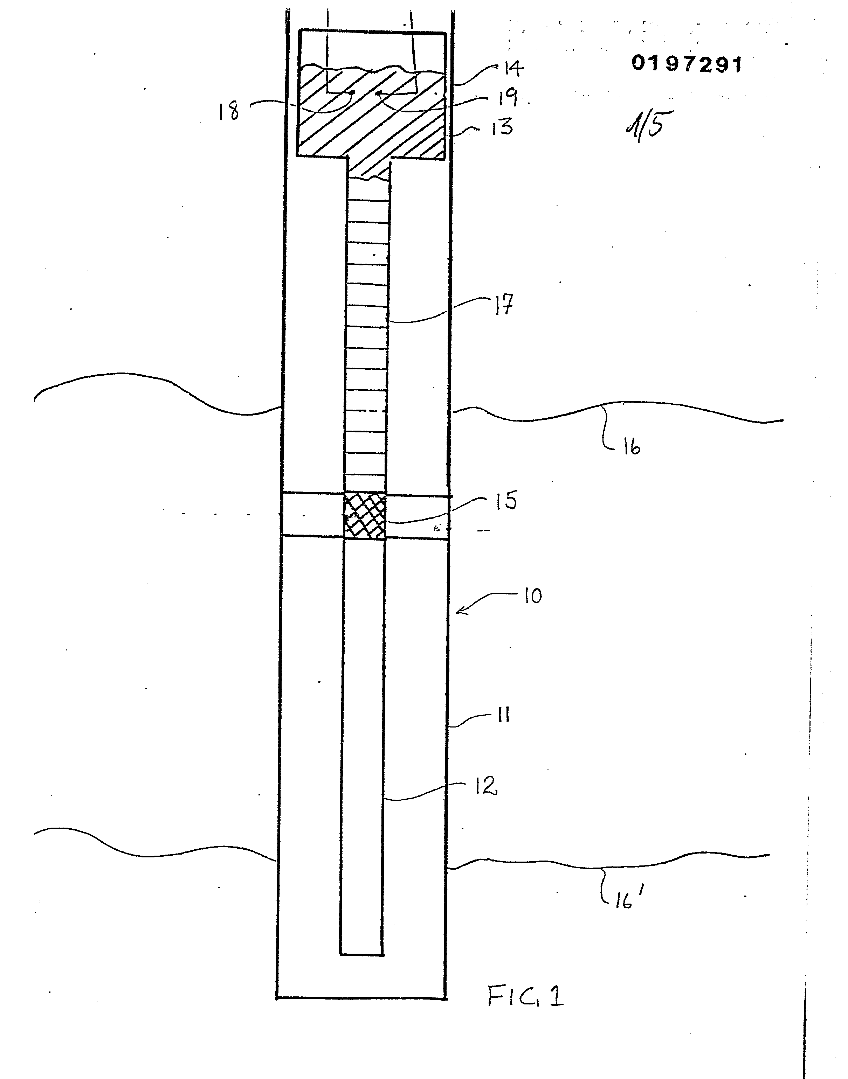

Turning now firstly to Fig. 1 there can be seen a
control rod generally designated by the reference
numeral 10 and comprising a sheath 11 of an element such as zirconium. A passage 12, for example in the form of a
hollow tube of zirconium, extends from a chamber or
store 13 at an upper end portion 14 of the control rod
along the control rod to the bottom end thereof. A
thermally sensitive device 15 in this case in the form
of a fusible plug of a material having a melting point
in the range 325 to 350°C is located in the passage 12
at a position just below the normal water level 16 in
the reactor vessel. For the purpose of illustration it
should be assumed that the portion of the control rod
below the thermally sensitive device 15 is located in
the core of the nuclear reactor within a cluster of fuel
rods. Above the fusible plug 15 there is a column of a
lead or zinc alloy 17 which typically has a melting
point of above 325°C. Above this support column in the
chamber 13 there is located a store of a material having
a high capture cross-section for thermal neutrons such
as cadmium, boron, samarium, dyspersium or gadolinium.
This material may also be a compound of one or more of
these elements. The material in question should either
have a melting point at or lower than the normal
operating temperature of the nuclear reactor, so that it
is in a molten state, or should be made flowable by
placing it in a suitable form, for example in the form
of small spheres.

In the event of loss of coolant from the reactor the
water level 16 will fall, for example to the level shown
by 16' and the space between the fuel elements will
rapidly heat up causing melting of the fusable plug 15
so that the molten support column 17 and the material
having a high capture cross-section for thermal neutrons
flows into the passage below the position of the fusible
plug 15. I.e. the material having a high capture
cross-section for thermal neutrons has moved from the
store 13 in which it is spaced out of neutron capturing
relationship with the fuel rods, into a position of neutron capturing relationship with the adjacent fuel rods, so that the chain reaction in these fuel rods is stopped.

The system described can either be incorporated in a special control rod intended solely for emergency purposes and having the dimensions of a normal control rod, or can be incorporated into an existing design of control rod having a fixed body of neutron capturing material for reactivity control, so that it acts as an emergency system when the normal control rod is withdrawn out of neutron capturing relationship with the adjacent fuel rods, i.e. when the reactor is operating at peak power.

Reference numerals 18 and 19 illustrate two switch contacts which are normally bridged by the molten material in the store 13 but which will go open circuit once the material 13 has flowed downwardly into the passage defined by rod 12. These contacts can be used to provide a signal indicating the operational state of the automatic safety system.

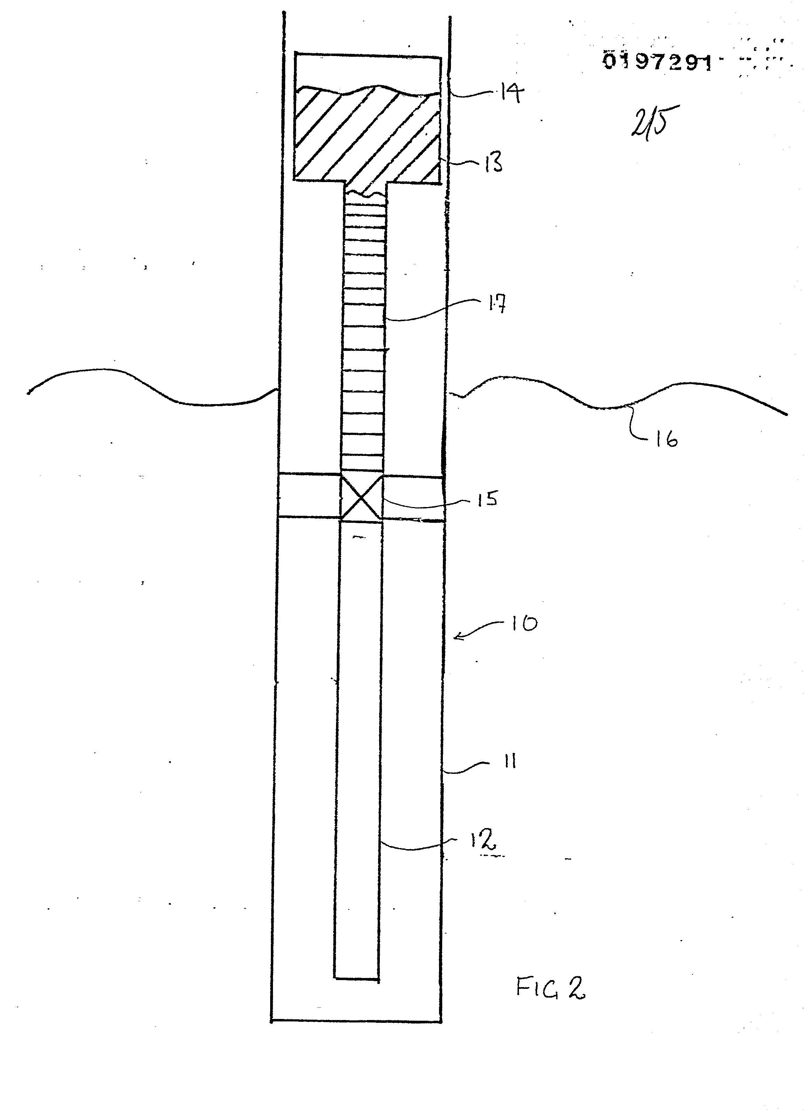

A similar embodiment is shown in Fig. 2 in which like reference numerals have been used to describe like parts. The only important distinction between the embodiment of Fig. 2 and the embodiment of Fig. 1 lies in the fact that the thermally sensitive device 15 is no longer a fusible plug but instead a thermal valve such as a bimetallic valve. The manner of operation of this embodiment is the same as the manner of operation of the embodiment of Fig. 1.

A yet further embodiment of the thermally sensitive device 15 is shown in Fig. 3. In this embodiment the thermally sensitive device is formed by a type of magnetic valve. The material 21 is a magnetic material having a Curie temperature which is greater than the
normal operating temperature of the nuclear reactor. The
element 1 is generally circular in shape and has a
central circular orifice 22 which is aligned with and
forms part of the passage means otherwise defined by the
tube 12. The second part of the thermally sensitive
device of the embodiment of Fig. 3 consists of a
cylindrical disk-like magnetic element 23 having a
central spigot 24 which projects upwardly into the
central orifice 22. The material of the disk 23 is a
permanent magnet of a material having a Curie
temperature substantially greater than the operational
temperature of the nuclear reactor. An O-ring 25 is
placed between the spigot 24 and the orifice 22 to
ensure good sealing. In view of the typical operating
temperature in a nuclear reactor the O-ring 25 may be of
metal or may be an alternative form of sealing device
better adapted to the operating temperatures involved.
In operation the permanent magnet 23 is normally held
against the magnet 21 by magnetism. If however the
element 21 should reach a temperature above the Curie
point its inherent magnetism will disappear and the
permanent magnet 23 will be released so that it falls
under gravity down the control rod and frees the passage
for the downward movement of the fusible support column
and the material having a high capture cross-section for
thermal neutrons.

Fig. 4 shows an alternative embodiment in which the
automatic safety system of the present teaching is
incorporated into a fuel rod of a nuclear reactor. In
this case the fuel rod again has a zirconium sleeve 31
and contains pellets 32 of uranium dioxide as a nuclear
fuel. At the bottom of the fuel rod there is located a
store 33 of a material having a high capture
cross-section for thermal neutrons. This store of
material, which basically consists of a molten pool of a suitable neutron absorber is spaced from the nuclear
fuel pellets 32 by a suitable inert spacer 34 so that
the material in the pool 33 is normally out of neutron
capturing relationship with the nuclear fuel pellets.
Two tubes 35 and 36 extend from the bottom end portion
of the nuclear fuel rod upwardly alongside the nuclear
fuel. The tube 35 is a tube of relatively large diameter
and is closed by a fusible plug 37 at a suitable
position in the top half of the nuclear fuel rod. Above
this fusible plug 37 there is located a column 38 of an
alloy of lead or zinc which is normally molten at the
operating temperature of the nuclear reactor. There is
no tendency for the material 33 to climb the tube 35
because the diameter of the tube 35 is chosen so as to
prevent capillary action. Also it is not strictly
speaking necessary for the tube 35 to dip into the pool
of material 33.

The tube 36 is however a capillary tube which normally
terminates above the surface of the pool of material 33.

In operation, if the fusible plug 37 is exposed to an
excessive temperature it will melt allowing the column
of molten material located above it to flow down into
the pool of material 33 thus causing the level of this
pool of material 33 to rise so that it covers the end of
the capillary tube 36 and climbs the capillary tube 36
by capillary action into a neutron capturing
relationship with the nuclear fuel in the fuel rod.

It may be convenient to provide a plurality of capillary
tubes rather than the single capillary tube shown in the
drawing.

Finally, in a modified embodiment shown in Fig. 5 the
tube 36 is no longer a capillary tube but is also a
larger diameter tube similar to the tube 35. In this case, bearing in mind that the space at the bottom of the fuel rod is restricted the downward flow of a dense material through the column 35 can be used to displace a less dense material upwardly through the tube 36.

In a further embodiment (not illustrated) the bottom of the tube 36 dips into the pool of material 33 and is closed by a fusible plug of material which melts once a critical temperature is reached and allows the molten material in the pool 33 to climb the tube 36 by capillary action.

1. An automatic system for reactivity control in a nuclear reactor, using a plurality of rod-like elements located, in use, inside the nuclear reactor vessel, wherein each rod-like element comprises an outer sheath, a store of a material having a high capture cross-section for thermal neutrons at an end portion of said sheath, passage means passing from said end portion along said rod-like element, and a thermally sensitive device normally preventing movement of said material along said passage means but responsive to an excessive temperature to permit movement of said material into said passage means.

2. An automatic system in accordance with claim 1 wherein said rod-like elements comprise control rods of a nuclear reactor.

3. An automatic system in accordance with claim 2 wherein said store of material is normally disposed above or below adjacent fuel rods of said nuclear reactor out of neutron capturing relationship therewith.

4. An automatic system in accordance with claim 1 wherein said rod-like elements comprise fuel rods of said nuclear reactor and wherein said store of material is normally disposed above or below the nuclear fuel contained in said fuel rods out of neutron capturing relationship therewith.

5. An automatic system in accordance with any of claims 1 to 4 wherein said material is itself molten or flowable at said excessive temperature.

6. An automatic system in accordance with any one of the preceding claims wherein said thermally sensitive device comprises a fusible plug adapted to melt and permit said material to flow downwardly into said passage means under gravity.

7. An automatic system in accordance with one of the claims 1 to 5 wherein said thermally sensitive device comprises a thermal valve positioned in thermally conducting relationship with one or more adjacent fuel rods of said nuclear reactor, for example a bimetallic strip, and wherein said thermal valve is adapted to open and to permit said material to flow down into said passage means under gravity.

8. An automatic system in accordance with one of the claims 1 to 5 wherein said thermally sensitive device comprises a magnetic valve including a magnetic element of a material having a Curie point corresponding to said excessive temperature, whereby the magnetic force of attraction of said magnetic element is substantially lost on reaching said Curie point thereby opening the valve, and wherein said valve is adapted to permit said material having a high capture cross-section for thermal neutrons to flow under gravity into said passage means.

9. An automatic system in accordance with one of the claims 6 to 9 wherein a fusible support column of a material which has a low capture cross-section for thermal neutrons and which is molten at said excessive temperature is provided above said thermally sensitive device, and wherein said material having a high capture cross-section for thermal neutrons is provided in an end portion of said rod-like element above said fusible support column.

10. An automatic system in accordance with claim 9 wherein said fusible support column comprises zinc or lead or an alloy thereof.

0197291

11. An automatic system in accordance with claim 1 wherein said store of material is molten, or possibly vaporised, at a normal operating temperature of said nuclear reactor and is provided in a bottom end portion of said rod-like element, wherein said passage means extends substantially from said bottom end portion of said rod-like element upwardly along said rod-like element, and wherein said thermally sensitive device is adapted to cause said material to flow upwardly along said passage means when said excessive temperature is reached.

12. An automatic system in accordance with claim 11 wherein said thermally sensitive device comprises a fusible material having a density greater than that of said material with a high capture cross-section for thermal neutrons and is itself molten at least at said excessive temperature with said rod-like element being adapted to permit said fusible material to flow downwardly into said store of material thereby causing the material in said store to rise into said passage means.

13. An automatic system in accordance with claim 12 wherein said thermally sensitive device further comprises a fusible plug for holding back said fusible material at a normal operating temperature of said nuclear reactor.

14. An automatic safety system in accordance with one of the claims 1 to 5 and 11 to 13, wherein said passage means comprises capillary passage means, and wherein said store of material is adapted to climb said passage means by capillary action on operation of said thermally sensitive device.

15. An automatic safety system in accordance with claim 14 wherein said capillary passage means extend into said store of neutron capturing material and wherein said thermally sensitive device comprises a fusible plug normally blocking said capillary passage means.

16. An automatic system in accordance with claim 15 wherein said capillary passage means has one or more openings provided at a level above said store of neutron capturing material and wherein said thermally sensitive device is adapted to permit material denser than said store of neutron capturing material to fall by gravity into said store of material when said excessive temperature is reached, thereby causing said neutron capturing material to rise into contact with said openings whereupon it ascends said capillary passages.

17. An automatic system in accordance with any one of the preceding claims wherein said material having a high capture cross-section for thermal neutrons comprises cadmium, sarmarium, dyspersium, gadolinium or boron or an alloy or compound of one or more of these elements.

18. An automatic safety system in accordance with any one of the preceding claims wherein means is provided for detecting whether said material having a high capture cross-section for thermal neutrons has moved into said passage means.

19. An automatic safety system in accordance with claim 18 wherein said detecting means comprises a switch contact normally bridged by said store of material but interrupted when at least some material has flowed out of said store.

20. Method of automatically controlling the reactivity of a nuclear reactor comprising the step of providing a

0197291

store of a material having a high capture cross-section for thermal neutrons in one or more rod-like elements in said nuclear reactor and permitting said material to move by natural physical forces independent of any energy supply from outside of said reactor vessel into thermal neutron capturing relationship with one or more fuel rods in the event of an excessive increase in the operating temperature of said fuel rod or rods above a normal operating temperature thereof.

0197291

1/5

FIG. 1

FIG 2

22

24

15

16

21

25

23

11

FIG 3

FIG 4

32

37

31

35

34

36

33

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 795 580 (D.P. SCHIVELY)<br><br>* Column 2, line 18 - column 3, line 46; figure * | 1-3,5, 11,12, 20 | G 21 C 9/02 |
| A | | 4,6,16 | |
| X | CH-A- 467 503 (ATOMIC POWER CONSTRUCTIONS LTD.)<br>* Column 2, line 18 - column 3, line 3; figure 2 * | 20 | |
| Y | | 1 | |
| A | | 2,3,5, 6 | TECHNICAL FIELDS SEARCHED (Int. Cl.4) |
| Y | DE-B-1 136 026 (DEUTSCHE BABCOCK & WILCOX)<br>* Column 3, figure * | 1 | G 21 C 7/00<br>G 21 C 9/00 |
| A | | 3,5,11 | |
| A | GB-A- 866 305 (HAWKER SIDDELEY NUCLEAR POWER)<br>* Page 1, lines 46-64; page 3, lines 45-65; figure 1 * | 1,14, 15 | |
| | --- -/- | | |

The present search report has been drawn up for all claims

| Place of search | Date of completion of the search | Examiner |
|---|---|---|
| THE HAGUE | 23-07-1986 | JANDL F. |

European Patent
Office

**EUROPEAN SEARCH REPORT**

0197291
Application number

EP 86 10 2740

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | KERNTECHNIK, vol. 12, no. 4, April 1970, pages 165-166, Munich, DE; H. SCHUMANN: "Monalit shielding materials on a ceramic basis" * Page 165, table 1; page 166, right-hand column, paragraph 1 * | 17 | |
| A | US-A-2 987 455 (N.E. HUSTON et al.) * Column 6, line 66 - column 7, line 11; figure 12 * | 1,7 | |
| A | US-A-3 897 302 (J.R. KLEIN) * Abstract; figures 1,2 * | 19 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 23-07-1986 | JANDL F. |